# EUROPÄISCHE PATENTSCHRIFT

(11) **EP 0 399 139 B1**
(45) Veröffentlichungstag und Bekanntmachung des Hinweises auf die Patenterteilung: **12.10.1994**
(21) Anmeldenummer: 90102548.6
(22) Anmeldetag: 09.02.1990
(51) Int. Cl.: H04Q 3/68

(54) **Verfahren zur Erweiterung eines dreistufigen regelmässigen Koppelfeldes**
Method for the extension of a regular three-stage coupling field
Méthode d'extension d'un champ de couplage régulier à trois étages

(30) Priorität: 23.05.1989 DE 3916720
(43) Veröffentlichungstag der Anmeldung: 28.11.1990
(73) Patentinhaber: ANT Nachrichtentechnik GmbH, D-71522 Backnang (DE)
(72) Erfinder: Brünle, Siegfried, Dipl.-Ing., D-7300 Esslingen (DE)

(56) Entgegenhaltungen:
- EP-A- 0 217 555
- US-A- 4 400 627

## Beschreibung

Die Erfindung geht aus von einem Verfahren gemäß den Merkmalen des Oberbegriffs des Patentanspruchs 1.

Koppelfelder müssen bei Mehrbedarf an durchzuschaltenden Verbindungen erweitert werden. Aus der DE-PS 28 03 065 ist ein dreistufiges unbegrenzt erweiterbares Koppelfeld bekannt. Dort werden Koppelvielfache (hier nachfolgend stets als Koppelblock bezeichnet) in allen drei Stufen erweitert. Für die Erweiterung muß dort eine erhebliche Vorleistung erbracht werden, d.h. in einem Stadium, wo der Grad der Erweiterung überhaupt noch nicht absehbar ist, müssen Koppelblöcke mit Blindverbindungen vorgesehen werden. Außerdem ist das dortige Koppelfeld nicht blockierungsfrei. Ähnliches gilt für die Erweiterung des Koppelfeldes gemäß DE-PS 11 30 482, welches nur zweistufig ist. Die Erweiterung des Koppelfeldes gemäß DE-OS 24 24 727 geschieht über parallel vorgesehene Koppelblöcke mit erheblichem Mehraufwand.

In der DE-OS-39 06 545 (Veröffentlichungstag : 13.9.90) wurde bereits vorgeschlagen, Koppelblöcke in der ersten und dritten oder in der zweiten Stufe schrittweise durch größere Koppelblöcke zu ersetzen. Beim jeweiligen Ersatz der Koppelblöcke wurden diese über einen redundanten Koppelblock schrittweise freigeschaltet.

Aufgabe der Erfindung ist es, das Verfahren, ausgehend vom Oberbegriff des Patentanspruchs 1, so auszubilden, daß der Aufwand an zusätzlichen Koppelblöcken bei der Erweiterung möglichst gering bleibt. Diese Aufgabe wird durch die Schritte des Patentanspruchs 1 gelöst. Die weiteren Patentansprüche betreffen Weiterbildungen dieser Lösung.

Das Verfahren nach der Erfindung besitzt folgende Vorteile:
- die Erweiterung kann während des Betriebs des Koppelfeldes ohne Betriebsbeeinträchtigung erfolgen, da während der Erweiterung Ersatzverbindungen über redundante Verbindungswege geschaltet werden,
- in der zweiten Stufe sind bei kleinen Koppelfeldern, die mit relativ großen Koppelblöcken bzw. Modulen aufgebaut sind, wenig Koppelblöcke notwendig,
- durch die systematische und regelmäßige Verdrahtung der Koppelblöcke wird auch bei der Erweiterung die Gefahr von Fehlschaltungen vermindert.

Anhand der Zeichnungen wird nun das Verfahren an einem Ausführungsbeispiel näher erläutert. Es zeigen:
Fig. 1 das dreistufige Koppelfeld vor dem Zusammenfassen von Koppelblöcken in der ersten und dritten Stufe,
Fig. 2 das dreistufige Koppelfeld nach dem Ausbau der zweiten Stufe,
Fig. 3 das dreistufige Koppelfeld nach dem Umleiten von Verbindungswegen,
Fig. 4 das dreistufige Koppelfeld nach der vollständigen Erweiterung,
Fig. 5 die Anzahl der Durchschaltemöglichkeiten vor der Erweiterung,
Fig. 6 die Anzahl der Durchschaltemöglichkeiten nach der Erweiterung.

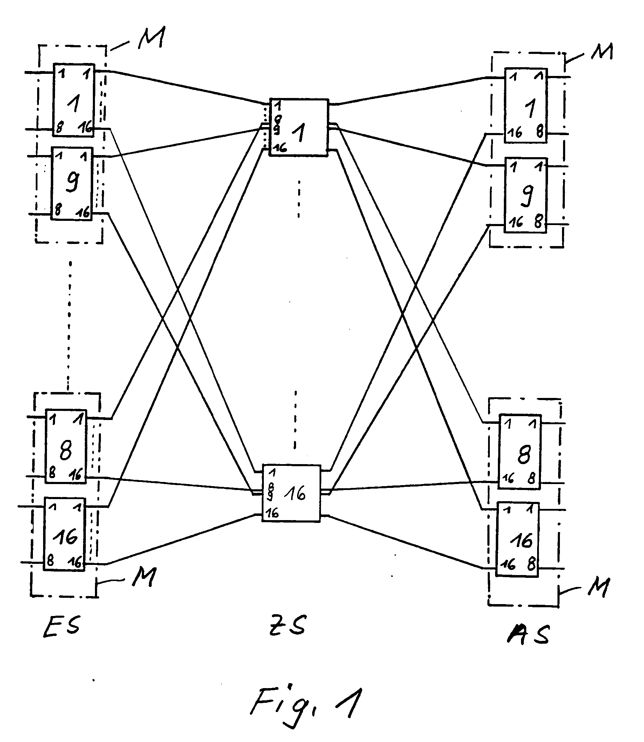

In Fig. 1 ist das dreistufige Koppelfeld vor der Erweiterung dargestellt. Für das Ausführungsbeispiel sind 16 Koppelblöcke (Koppelvielfache) der Größe 8 x 16 in der ersten Stufe ES und ebenfalls 16 Koppelblöcke der Größe 16 x 8 in der dritten Stufe AS vorgesehen. In der zweiten Stufe ZS sind 16 Koppelblöcke der Größe 16 x 16 vorgesehen. Das Koppelfeld ist regelmäßig aufgebaut, d.h. die 16 Ausgänge des ersten Koppelblocks der ersten Stufe ES sind jeweils mit dem ersten Eingang der 16 Koppelblöcke der zweiten Stufe verbunden, und zwar in der Reihenfolge:
1. Ausgang des Koppelblocks 1 (ES) mit
1. Eingang des Koppelblocks 1 (ZS), 2. Ausgang des Koppelblocks 1 (ES) mit 1. Eingang des Koppelblocks 2 (ZS) usw. Die Verbindungen von den Koppelblöcken der zweiten Stufe zu den Koppelblöcken der dritten Stufe sind symmetrisch zu den Verbindungen von den Koppelblöcken der zweiten Stufe zu den Koppelblöcken der ersten Stufe. Wie in Fig. 1 dargestellt sind je zwei benachbarte Koppelblöcke der Stufen ES und AS bereits vor der Koppelfelderweiterung in einem Modul M untergebracht. Ein Modul ist hier in der Stufe ES ein 16 x 32 Koppelblock, der zur Realisierung zweier 8 x 16 Koppelblöcke eingesetzt wird. Für die Ausgangsstufe AS gilt das Entsprechende. Das dreistufige Koppelfeld ist blockierungsfrei, d.h. jede beliebige Eingangsleitung der ersten Stufe ES kann mit jeder beliebigen Ausgangsleitung der dritten Stufe AS über einen eindeutigen Verbindungsweg verbunden werden. Das Koppelfeld ist auch redundant bezüglich der über die zweite Stufe ZS durchschaltbaren Verbindungswege; denn die zweite Stufe weist einen Koppelblock mehr auf als es für ein Clos-Koppelfeld (Bell System Technical Journal, Vol.XXXII, 1953, Seiten 406 - 425) notwendig ist. Über diesen überzähligen Koppelblock können Verbindungswege bei der Erweiterung während des Betriebs ersatzgeschaltet werden. Als Ersatzverbindungen können alternativ dazu nicht benötigte Verbindungswege über andere Koppelblöcke herangezogen werden oder die Kombination aus Verbindungswege über den überzähligen Koppelblock und Verbindungswege über sonstige Koppelblöcke, die nicht benötigt werden.

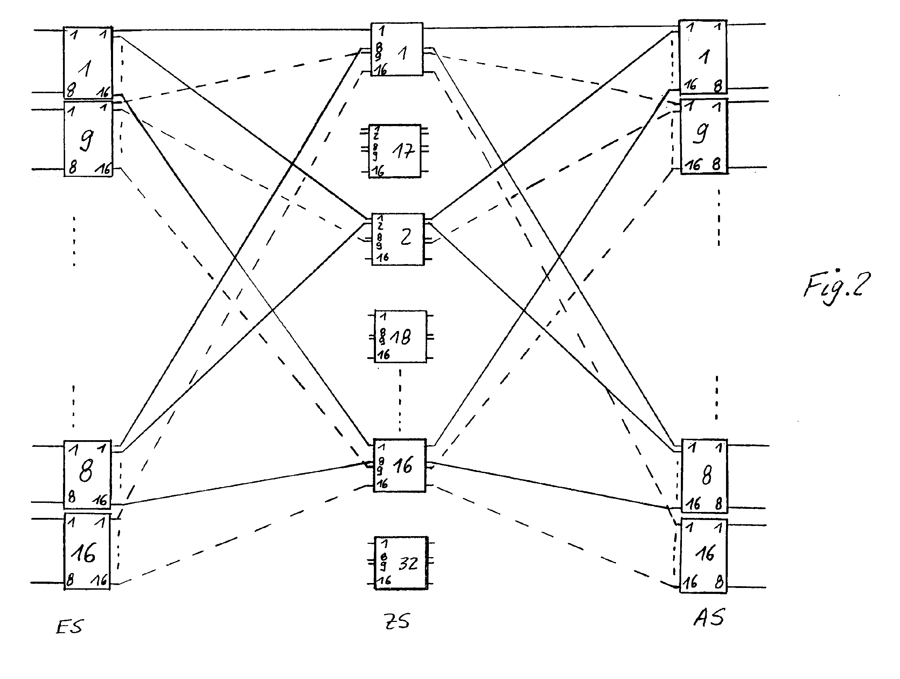

Als erste Erweiterungsmaßnahme werden in der zweiten Stufe zusätzliche Koppelblöcke - in Fig. 2 die Koppelblöcke 17 bis 32 - hinzugefügt. Die Anzahl der Eingänge dieser zusätzlichen Koppelblöcke muß mindestens so groß sein, wie die Anzahl der zu nach der Erweiterung vergrößerten Koppelblöcke in der ersten bzw. dritten Stufe. Im dargestellten Ausführungsbeispiel wurden für die zusätzlichen Koppelblöcke solche der Größe 16 x 16 gewählt, also mit der doppelten Anzahl der notwendigen Eingäge bzw. Ausgänge, da mit dieser Zahl von Eingängen bzw. Ausgängen bei der Erweiterung in der ersten und dritten Stufe eine sehr viel höhere Ausbaureserve besteht.

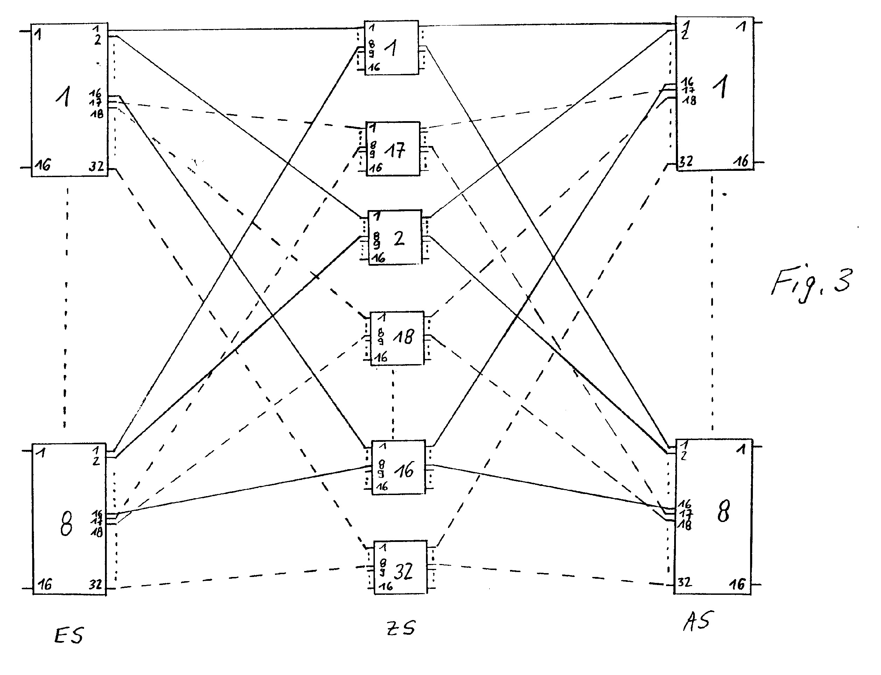

Als zweite Erweiterungsmaßnahme werden die in den Modulen M untergebrachten je zwei 8 x 16 bzw. 16 x 8 Koppelblöcke der ersten bzw. dritten Stufe jeweils zusammengefaßt zu größeren Koppelblöcken der Größe 16 x 32 bzw. 32 x 16. Aus den Koppelblöcken 1 und 9 im jeweils ersten Modul der ersten und dritten Stufe wird dann der vergrößerte Koppelblock 1 (Fig. 2 und 3). Aus den Koppelblöcken 8 und 16 wird der neue Koppelblock 8. Es entstehen also in der ersten Stufe aus 16 ursprünglichen 8 x 16 Koppelblöcken 8 neue 16 x 32 Koppelblöcke. In der dritten Stufe entstehen aus 16 ursprünglichen 16 x 8 Koppelblöcken 8 neue 32 x 16 Koppelblöcke. Das Zusammenfassen der in den Modulen M untergebrachten zwei kleineren Koppelblöcke zu einem größeren Koppelblock kann auf einfache Weise durch eine andere Eingangs- /Ausgangs-Zuordnung erreicht werden, indem in der zweiten Stufe die Verbindungen des ursprünglichen Koppelblocks 1 neu auf die Koppelblöcke 1 und 17 verteilt werden. Entsprechendes gilt für die übrigen ursprünglichen Koppelblöcke 2 bis 16.
Im Ausführungsbeispiel sind pro Koppelblock in der ersten Stufe ES die Ausgänge 17 bis 32, die zu den ursprünglichen Koppelblöcken der zweiten Stufe ZS geführt haben, auf die zusätzlichen Koppelblöcke 17 bis 32 umzuleiten. Diese umzuleitenden Verbindungswege sind in Fig. 2 gestrichelt dargestellt. Damit diese Umleitung während des Betriebs ohne Betriebsbeeinträchtigung durchgeführt werden kann, wird jeweils ein Koppelblock der zweiten Stufe, bei dem die Umleitung vorgenommen werden soll, über redundante Verbindungswege, beispielsweise einen überzähligen Koppelblock, wie zuvor geschildert, ersatzgeschaltet. Alle ersatzgeschalteten Verbindungen werden anschließend von den redundanten Ersatzwegen auf die Eingänge und Ausgänge der entsprechenden Koppelblockpaare, z. B. 1 und 17, zurückgeschaltet. Dieses Ersatzschalten und wieder Zurückschalten wird entsprechend bei allen anderen ursprünglichen Koppelblöcken der zweiten Stufe ZS wiederholt. In diesem Beispiel werden jeweils pro Koppelblock in der zweiten Stufe 8 Verbindungswege zwischen der ersten und zweiten Stufe sowie die entsprechenden 8 Verbindungswege zwischen der zweiten und dritten Stufe umgeleitet. Allgemein müssen bei einer Vergrößerung der Koppelblöcke in der ersten bzw. dritten Stufe um den Faktor dt (dt-1)dt Verbindungswege von einem ursprünglichen Koppelblock in der zweiten Stufe auf den/die neuen Koppelblock/Koppelblöcke umgeleitet werden.

Die Reihenfolge der Erweiterung kann natürlich auch variiert werden. Es ist auch möglich, in der zweiten Stufe die zusätzlichen Koppelblöcke nur schrittweise je nach Bedarf auszubauen.

Fig. 3 zeigt das Koppelfeld im Stadium nach der Umleitung aller Verbindungswege auf die zusätzlichen Koppelfelder 17 bis 32. Die umgeleiteten Verbindungswege sind gestrichelt dargestellt. Wie aus dieser Figur ersichtlich, sind jeweils die Eingäge, bzw. Ausgänge 9 bis 16 der ursprünglichen Koppelblöcke der zweiten Stufe ZS auf die Eingänge bzw. Ausgänge 1 bis 8 der zusätzlichen Koppelblöcke umgeleitet. Somit sind nach der Umleitung die Eingäge bzw. die Ausgänge 9 bis 16 sowohl der ursprünglichen als auch der hinzugefügten Koppelblöcke der zweiten Stufe zur Herstellung zusätzlicher Verbindungswege frei.

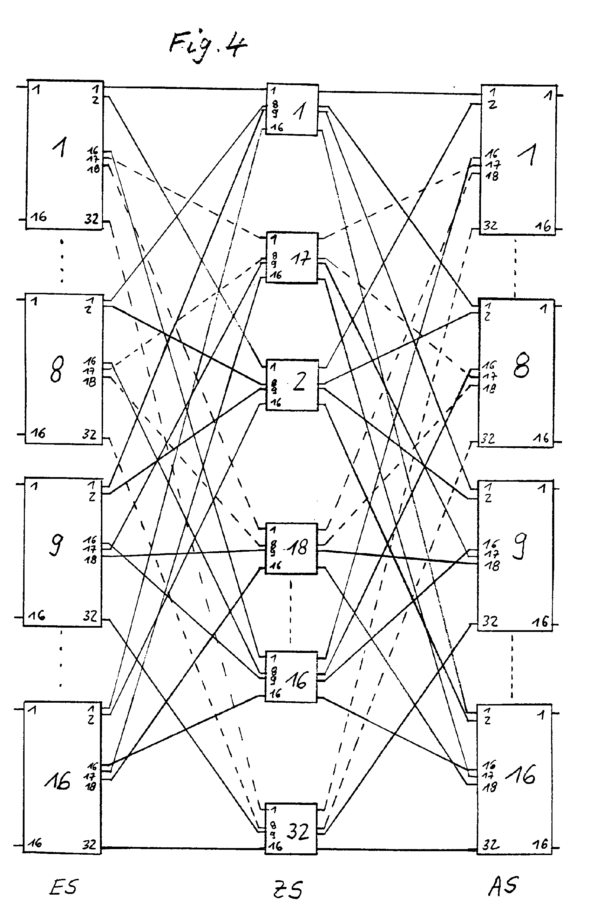

Fig. 4 zeigt nun einen weiteren Erweiterungsschritt. Hier sind in der ersten und dritten Stufe jeweils acht zusätzliche Koppelblöcke 9 bis 16 hinzugefügt. Diese sind ebenso wie die vergrößerten Koppelblöcke 1 bis 8 als 16 x 32 Koppelblöcke ausgebildet. So kann die Kapazität der zusätzlichen 16 x 16 Koppelblöcke der zweiten Stufe voll genutzt werden.

Während die Erweiterung zuvor an einem konkreten Ausführungsbeispiel erläutert wurde, wird nun noch das Prinzip der Erweiterung allgemein aufgezeigt:

Das Koppelfeld wird in der ersten und dritten Stufe mit folgenden Modulen aufgebaut:
- erste Stufe: (n x 2n)-Module
- dritte Stufe: (2n x n)-Module

Mit a = n/t (t = 1,2,4,8,...,n) wird in der ersten Stufe ein (n x 2n)-Modul als t(a x 2a)-Koppelblöcke eingesetzt.

Bei der Erweiterung der Koppelblock-Größe in der ersten Stufe wird der Faktor t verkleinert. Die Erweiterung erfolgt für eine Verkleinerung von t um den Faktor dt (dt = 2,4,8,...,t) nach folgenden Schritten:
1. Es werden in der zweiten Stufe 2a*(dt-1) neue Koppelblöcke bestückt: Der (2a+1)-te bis (2a*dt)-te Koppelblock
2. Ersatzschalten des k-ten Koppelblocks in der zweiten Stufe (k≦2a)
3. Umstecken von Kabeln des k-ten Koppelblocks an die (2a*i+k)-ten Koppelblöcke (mit i = 1,2,3,...,dt-1). Insgesamt müssen (dt-1)/dt der Kabel umgesteckt werden.
4. Anschließen von neuen Kabeln an die (2a*i+k)-ten Koppelblöcke (mit i = 0,1,2,3,...,dt-1)
5. Die beim Ersatzschalten des k-ten Koppelblocks ersatzgeschalteten Verbindungen über die (2a*i+k)-ten Koppelblöcke (mit i = 0,1,2,3,...,dt-1) zurückschalten.
6. Wiederholen der Schritte 2 - 5 für k = 1,...,2a.

Durch die Vergrößerung der Koppelblock-Größe in der ersten und dritten Stufe müssen in der zweiten Stufe neue Koppelblöcke gesteckt werden. Nach der Umsteckung der Kabel können dann an die ursprünglichen Steckplätze neue Kabel gesteckt werden, die mit neuen Modulen in der ersten und dritten Stufe verbunden werden.

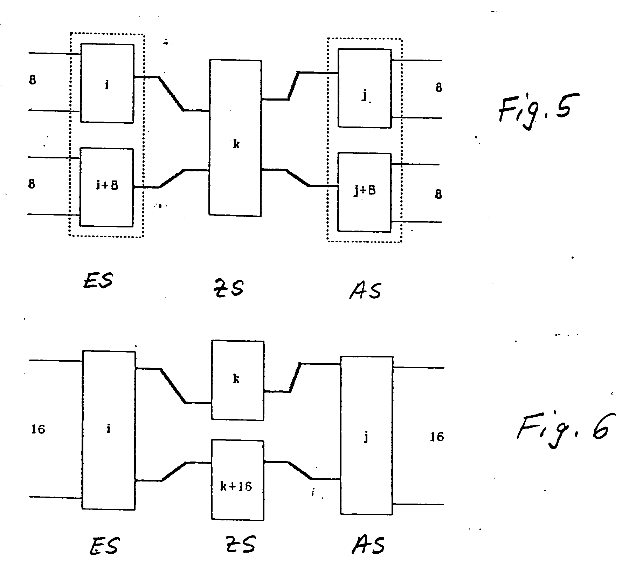

Beweis für t = 2 und dt = 2: Figuren 5 und 6:
- Figur 5:: Anzahl an Durchschaltemöglichkeiten vor der Erweiterung.
- Figur 6:: Anzahl an Durchschaltemöglichkeiten nach der Erweiterung.

Wie aus den Figuren 5 und 6 hervorgeht, bleibt die Zahl der Durchschaltemöglichkeiten erhalten.

## Patentansprüche

1. Verfahren zur Erweiterung eines dreistufigen regelmäßigen Koppelfeldes, bei welchem die Größe der Koppelblöcke in der ersten und dritten Stufe erweitert wird, indem in der ersten und dritten Stufe jeweils mindestens zwei Koppelblöcke zu einem größeren Koppelblock zusammengefaßt werden und bei welchem die erste, zweite und dritte Stufe um zusätzliche Koppelblöcke erweitert wird, gekennzeichnet durch folgende Schritte:
- Ersatzschalten der durchschaltbaren Verbindungen eines Koppelblocks in der zweiten Stufe über in der zweiten Stufe vorgesehene redundante Verbindungswege,
- Hinzufügen mindestens eines zusätzlichen Koppelblocks in der zweiten Stufe, wobei die Anzahl der Eingänge dieses Koppelblocks bzw. dieser Koppelblöcke mindestens gleich der Anzahl der vergrößerten Koppelblöcke in der ersten Stufe ist,
- Umleiten zwischen der ersten und zweiten Stufe einerseits und zwischen der zweiten und dritten Stufe andererseits so vieler Verbindungswege des ersatzgeschalteten Koppelblocks in der zweiten Stufe, wie sich aus der Anzahl der Koppelblöcke vor der Erweiterung in der ersten Stufe vermindert um die Anzahl der größeren Koppelblöcke in der ersten Stufe ergibt,
- Zurückschalten der ersatzgeschalteten Verbindungen des Koppelblocks/der Koppelblöcke auf den ursprünglichen und auf den zusätzlichen Koppelblock bzw. die zusätzlichen Koppelblöcke,
- Wiederholen obiger Schritte für die anderen ursprünglichen Koppelblöcke in der zweiten Stufe,
- regelmäßiges Verbinden der Ausgänge der zusätzlichen Koppelblöcke in der ersten Stufe bzw. Eingänge der zusätzlichen Koppelblöcke in der dritten Stufe mit den noch freien Ein-/Ausgängen der nun vorhandenen Koppelblöcke in der zweiten Stufe.

2. Verfahren nach Anspruch 1, dadurch gekennzeichnet,
daß in der ersten und dritten Stufe bereits vor der Erweiterung die zusammenzufassenden Koppelblöcke jeweils in einem Modul untergebracht werden.

3. Verfahren nach Anspruch 1 oder 2, dadurch gekennzeichnet,
daß die zusätzlichen Koppelblöcke der ersten und dritten Stufe jeweils bezüglich mindestens zweier Koppelblöcke in Modulen untergebracht werden.

4. Verfahren nach einem der Ansprüche 1 bis 3, dadurch gekennzeichnet,
daß das Ersatzschalten der durchschaltbaren Verbindungen eines Koppelblocks in der zweiten Stufe über einen bezüglich eines nichtredundanten blockierungsfreien Clos-Koppelfeldes überzähligen redundanten Koppelblock vorgenommen wird.

5. Verfahren nach einem der Ansprüche 1 bis 3, dadurch gekennzeichnet,
daß das Ersatzschalten der durchschaltbaren Verbindungen eines Koppelblocks in der zweiten Stufe über in der zweiten Stufe zwar vorgesehene, jedoch nicht benötigte Verbindungswege eines Koppelblocks oder mehrerer Koppelblöcke vorgenommen wird.

6. Verfahren nach einem der Ansprüche 1 bis 3, dadurch gekennzeichnet,
daß das Ersatzschalten der durchschaltbaren Verbindungen eines Koppelblocks in der zweiten Stufe zu einem Teil über einen bezüglich eines nichtredundanten blockierungsfreien Clos-Koppelfeldes überzähligen redundanten Koppelblock und zu einem anderen Teil über in der zweiten Stufe zwar vorgesehene jedoch nicht benötigte Verbindungswege eines Koppelblocks oder mehrerer Koppelblöcke vorgenommen wird.

## Claims

1. A method of expanding a regular three-stage switching array wherein the size of the switching blocks in the first and third stages is expanded in that at least two switching blocks are combined in each of the first and third stages to form one larger switching block and wherein the first, second and third stages are expanded by additional switching blocks, characterized by the following steps:
- putting into use the connections of a switching block in the second stage that can be switched through via redundant connection paths provided in the second stage;
- adding at least one additional switching block in the second stage, with the number of inputs of this switching block or of these switching blocks being at least equal to the number of the enlarged switching blocks in the first stage;
- rerouting between the first and second stage on the one hand, and between the second and third stage, on the other hand, as many connection paths of the alternately connected switching block in the second stage as result from the number of switching blocks prior to expansion in the first stage reduced by the number of larger switching blocks in the first stage;
- switching back the alternate connections of the switching block/blocks to the original and to the additional switching block or blocks;
- repeating the above steps for the other original switching blocks in the second stage;
- regularly connecting the outputs of the additional switching blocks in the first stage and the inputs of the additional switching blocks in the third stage, respectively with the inputs/outputs that are still free in the now existing switching blocks in the second stage.

2. A method as defined in claim 1, wherein the switching blocks to be combined in the first and third stage are already disposed in a respective module prior to expansion.

3. A method as defined in claim 1 or 2, wherein the additional switching blocks of the first and third stages are disposed in modules, in each case with respect to at least two switching blocks.

4. A method according to one of claims 1 to 3, wherein the connections of a switching block in the second stage that can be put into use are alternately connected via an extra redundant switching block with respect to a non-redundant, blocking-free, Clos-type switching array.

5. A method as defined in one of claims 1 to 3, wherein the connections of a switching block in the second stage that can be put into use are alternately connected via connection paths of one or a plurality of switching blocks that are provided in the second stage but are not required.

6. A method as defined in one of claims 1 to 3, wherein some of the connections of a switching block in the second stage that can be put into use are alternately connected via a redundant switching block that is in excess with respect to a non-redundant, non-blocking Clos type switching array, and some are alternately connected via connection paths of one or a plurality of switching blocks that are provided in the second stage but are not required.

## Revendications

1. Procédé pour l'extension d'un champ de couplage régulier à trois étages, dans lequel la dimension des blocs de couplage dans les premier et troisième étages est étendue, en ce que dans les premier et troisième étages, chaque fois, au moins deux blocs de couplage sont réunis en un bloc de couplage plus grand, et dans lequel les premier, deuxième et troisième étages sont étendus afin de former des blocs de couplage supplémentaires, caractérisé par les étapes suivantes :
- mise en circuit de remplacement des liaisons susceptibles d'être mise en communication d'un bloc de couplage dans le deuxième étage par l'intermédiaire de trajets de liaison redondants prévus dans le deuxième étage,
- adjonction d'au moins un bloc de couplage supplémentaire dans le deuxième étage, le nombre des entrées de ce bloc de couplage ou bien de ces blocs de couplage étant au moins égal au nombre des blocs de couplage agrandis dans le premier étage,
- dérivation, entre les premier et deuxième étages d'une part et entre les deuxième et troisième étages d'autre part, d'autant de trajets de liaison du bloc de couplage mis en circuit en remplacement dans le deuxième étage, comme cela résulte du nombre des blocs de couplage avant l'extension dans le premier étage réduit du nombre des blocs de couplage plus grands dans le premier étage,
- mise en circuit en retour des liaisons mises en circuit en remplacement du bloc de couplage/des blocs de couplage sur le bloc de couplage d'origine et sur le bloc de couplage supplémentaire ou bien les blocs de couplage supplémentaires,
- répétition des étapes ci-dessus pour les autres blocs de couplage d'origine dans le deuxième étage,
- liaison régulière des sorties des blocs de couplage supplémentaires dans le premier étage ou bien des entrées des blocs de couplage supplémentaires dans le troisième étage avec les entrées/sorties encore libres des blocs de couplage maintenant présents dans le deuxième étage.

2. Procédé selon la revendication 1, caractérisé en ce que dans les premier et troisième étages, déjà avant l'extension, les blocs de couplage se réunissant sont logés chaque fois dans un module.

3. Procédé selon la revendication 1 ou la revendication 2, caractérisé en ce que les blocs de couplage supplémentaires des premier et troisième étages, chaque fois, en ce qui concerne au moins deux blocs de couplage, sont logés dans des modules.

4. Procédé selon une des revendications 1 à 3, caractérisé en ce que la mise en circuit de remplacement des liaisons susceptibles d'être mises en communication d'un bloc de couplage dans le deuxième étage est effectué par l'intermédiaire d'un bloc de couplage redondant, en surnombre par rapport à un champ de couplage de Clos libre de blocage, non redondant.

5. Procédé selon une des revendications 1 à 3, caractérisé en ce que la mise en circuit de remplacement des liaisons susceptibles d'être mises en communication d'un bloc de couplage dans le deuxième étage a lieu par l'intermédiaire de trajet de liaison d'un bloc de couplage ou de plusieurs blocs de couplage certes prévus dans le deuxième étage, cependant non nécessaires.

6. Procédé selon une des revendications 1 à 3, caractérisé en ce que la mise en circuit de remplacement des liaisons susceptibles d'être mises en communication d'un bloc de couplage dans le deuxième étage est effectuée, d'une part, par l'intermédiaire d'un bloc de couplage redondant, en surnombre par rapport à un champ de couplage de Clos libre de blocage, non redondant, et, d'autre part, par l'intermédiaire de trajet de liaison d'un bloc de couplage ou de plusieurs blocs de couplage certes prévus dans le deuxième étage, cependant non nécessaires.
